Europäisches Patentamt

European Patent Office

Office européen des brevets

(11) Numéro de publication: **0 383 643**

**A1**

## (12) DEMANDE DE BREVET EUROPEEN

(21) Numéro de dépôt: **90400191.4**

(22) Date de dépôt: **23.01.90**

(51) Int. Cl.5: **C02F 1/76**

(30) Priorité: **16.02.89 FR 8902042**

(43) Date de publication de la demande:
**22.08.90 Bulletin 90/34**

(84) Etats contractants désignés:
**AT BE CH DE DK ES GB GR IT LI LU NL SE**

(71) Demandeur: **LYONNAISE DES EAUX**
**52 rue de Lisbonne**
**F-75008 Paris(FR)**

(72) Inventeur: **Feray, Cathy**
**24 rue Huché**
**F-92150 Suresnes(FR)**
Inventeur: **Hubele, Conrad**
**80 route de Saint-Nom**
**F-78620 L'Etang La Ville(FR)**

(74) Mandataire: **Armengaud Ainé, Alain et al**
**Cabinet ARMENGAUD AINE 3 Avenue**
**Bugeaud**
**F-75116 Paris(FR)**

(54) **Procédé de régulation du chlore libre résiduel dans l'eau.**

(57) Procédé pour la régulation du chlore libre résiduel dans l'eau de consommation, caractérisé en ce que la régulation est opérée par introduction d'une quantité de chlore déterminée en fonction de la demande de chlore "en tête", c'est-à-dire en amont de la filière de traitement ou du stockage de l'eau, tout en obtenant dans le réseau de distribution de l'eau dont la teneur en chlore libre résiduel atteint la valeur de consigne. On détermine rapidement la demande en chlore de l'eau à l'entrée de la filière de traitement ou du stockage, en accélérant par chauffage les réactions liées à la désinfection de façon à obtenir dans un court laps de temps (5 à 10 mn environ) une eau dont la teneur en chlore libre résiduel correspond à la valeur recherchée. On opère successivement un certain nombre d'analyses de l'eau brute à laquelle on ajoute des doses croissantes de chlore pour mesurer le chlore libre résiduel. La valeur de ce dernier est enregistrée dans une mémoire pour chaque essai réalisé en fonction de la quantité de chlore introduit. A l'aide d'un logiciel graphique, on trace la courbe de demande en chlore. La concentration de chlore à introduire dans l'eau est définie grâce à cette courbe, en fonction d'une valeur de chlore libre fixée, servant de valeur de consigne.

## PROCEDE DE REGULATION DU CHLORE LIBRE RESIDUEL DANS L'EAU

L'eau destinée à la distribution pour des usages urbains ou industriels est généralement traitée par des moyens appropriés à sa pollution éventuelle, puis stockée et distribuée.

Pour éviter les développements organiques, qu'il s'agisse d'algues, de bactéries ou de germes pathogènes, il est nécessaire d'injecter un désinfectant, en général du chlore, en amont d'une filière de traitement ou d'un stockage, à une dose telle que l'eau soit désinfectée et qu'il subsiste seulement, à l'entrée du réseau de distribution, une certaine quantité de chlore appelé chlore résiduel - en général de à 0,05 à 0,2 mg/l.

Un temps de contact est nécessaire pour la désinfection de l'eau qui doit être stockée pendant ce temps, mais la durée du stockage peut être variable, en particulier pour répondre aux variations de la demande en aval, alors que la production en amont est continue.

Il est d'usage constant de contrôler plus particulièrement la concentration de chlore résiduel à l'entrée du réseau de distribution, c'est-à-dire à la sortie du stockage, et de régler en conséquence la dose de chlore injectée à l'entrée du stockage.

Ce procédé n'est pas satisfaisant parce qu'il faut attendre un temps au moins égal à la durée de stockage pour vérifier que le résultat souhaité est obtenu pour un réglage donné, la consommation de chlore pour la désinfection en cours du stockage n'étant pas prévisible a priori ; en particulier, dans le cas d'une dégradation de la qualité de l'eau en amont, entraînant une demande en chlore supérieure à celle prévue et assurée par le réglage en cours, on ne peut s'en apercevoir que longtemps après quand tout le stockage est affecté par le manque de chlore. En cas de variations fréquentes de la qualité de l'eau, un réglage précis n'est pas possible et il faut ajuster arbitrairement la dose de chlore soit au niveau correspondant à la demande maximale, soit à un niveau moyen. Dans le premier cas, on risque pendant les périodes de faible demande une consommation excessive de chlore et une dégradation des qualités organoleptiques des eaux potables ; dans le deuxième cas on risque, pendant les périodes de forte demande en chlore, une désinfection insuffisante et une pollution du réseau.

Le procédé selon l'invention consiste à faire une régulation, non plus par "l'aval" mais par "l'amont", par introduction dans l'eau d'une quantité de chlore déterminée, en fonction, non plus de la teneur en chlore libre résiduel à la sortie du stockage, c'est-à-dire à l'entrée du réseau de distribution, mais en fonction de la demande de chlore "en tête", c'est-à-dire avant stockage, à l'entrée de ce dernier.

Le procédé suivant l'invention implique de déterminer rapidement la demande en chlore de l'eau à l'entrée du stockage, permettant ainsi un réglage de l'injection de chlore ajusté à la demande, avec un temps de réponse très faible.

Suivant une caractéristique de l'invention, les réactions liées à la désinfection sont accélérées par chauffage de façon à obtenir en un court laps de temps, par exemple 5 à 10 minutes, une mesure de la valeur du chlore libre résiduel correspondant aux résultats jusqu'ici contrôlés à la sortie du stockage. Le procédé tient compte des différents composés susceptibles d'intervenir sur la demande en chlore, en particulier l'ammoniaque, les matières organiques, les ions $Fe^{--}$, $NO^{2-}$.

Dans ce but, on prélève de l'eau brute et on fait des analyses successives, durant un temps de l'ordre de 5 minutes chacune, avec des doses croissantes de chlore, pour mesurer le chlore libre résiduel apparaissant au-delà du point critique, désigné habituellement sous le nom de "Breakpoint".

Pour atteindre ce but, on utilise, suivant l'invention :
- un ballon de chauffage à $45°$ avec agitation et sonde de température,
- un ballon isotherme de réaction ; le temps de réaction, environ 5 à 10 minutes, est déterminé par des essais préalables et suivant la nature de l'eau,
- un réfrigérant à $20°$ C,
- un analyseur de chlore libre permettant de faire des contrôles successifs rapprochés durant chacun environ 2 minutes.

La durée du séjour dans le ballon isotherme de réaction conditionne la durée du cycle.

La valeur du chlore libre résiduel est enregistrée dans une mémoire pour chaque essai réalisé en fonction de la quantité de chlore introduit ; un logiciel graphique permet de tracer la courbe de demande en chlore : chlore libre en fonction du chlore introduit.

En fonction d'une valeur de chlore libre fixée, servant de point de consigne, on définit immédiatement, grâce à cette courbe, quelle est la concentration de chlore à introduire dans l'eau, et on peut réguler la dose de chlore à introduire en amont du stockage en fonction de la demande en chlore de l'eau qui l'alimente.

La demande en chlore résulte de la présence dans l'eau de certains composés qui sont détectables ou mesurables directement (mesure de la densité optique à 254 nanomètre, dosage de l'ammoniaque, des ions $Fe^{2+}$, $NH^{2+}$ ...).

Ces paramètres peuvent faire l'objet d'un contrôle automatique qui rend compte de la qualité de l'eau. Si cette qualité est constante, il n'est pas nécessaire de reproduire le protocole de mesure de la demande en chlore et on peut se contenter de vérifier à intervalles réguliers un point sur la courbe de chlore libre résiduel, au voisinage du point de consigne. Si la qualité de l'eau brute varie de façon sensible, une courbe complète de consommation de chlore est alors tracée pour déterminer la nouvelle dose de chlore à introduire afin d'obtenir la concentration en chlore libre résiduel, fixée comme point de consigne.

## Revendications

1 - Procédé pour la régulation du chlore libre résiduel dans l'eau de consommation, caractérisé en ce que la régulation est opérée par introduction d'une quantité de chlore déterminée en fonction de la demande de chlore "en tête", c'est-à-dire en amont de la filière de traitement ou du stockage de l'eau, tout en obtenant dans le réseau de distribution de l'eau dont la teneur en chlore libre résiduel atteint la valeur de consigne.

2 - Procédé selon la revendication 1, caractérisé en ce que l'on détermine rapidement la demande en chlore de l'eau à l'entrée de la filière de traitement ou du stockage, en accélérant par chauffage les réactions liées à la désinfection de façon à obtenir dans un court laps de temps (5 à 10 mn environ) une eau dont la teneur en chlore libre résiduel correspond à la valeur recherchée.

3 - Procédé selon l'une des revendications précédentes, qui consiste à opérer successivement un certain nombre d'analyses de l'eau brute à laquelle on ajoute des doses croissantes de chlore pour mesurer le chlore libre résiduel.

4 - Procédé selon l'une quelconque des revendications précédentes dans lequel la valeur du chlore libre résiduel est enregistrée dans une mémoire pour chaque essai réalisé en fonction de la quantité de chlore introduit, un logiciel graphique permettant de tracer la courbe de demande en chlore, la concentration de chlore à introduire dans l'eau étant définie grâce à la courbe en fonction d'une valeur de chlore libre fixée, servant de point de consigne.

5 - Procédé suivant l'une quelconque des revendications précédentes, caractérisé en ce que l'on utilise, pour les analyses successives opérées sur l'eau brute, une enceinte de chauffage avec agitation et sonde de température, une enceinte isotherme de laquelle l'échantillon à analyser passe dans un réfrigérant et enfin un analyseur de chlore susceptible de faire des contrôles successifs dans un laps de temps minimum.

6 - Procédé suivant la revendication 5, caractérisé en ce que la température de chauffage de l'enceinte de chauffage est voisine de 45° C et en ce que la température du réfrigérant est voisine de 20° C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 999 797 (CAMPBELL) <br> * Revendications * <br> --- | 1-6 | C 02 F 1/76 |
| A | TRANSACTIONS, vol. 19, no. 3, 1980, pages 3-17, ISA, Research Triangle Park, North Carolina, US; H.A. FERTIK et al.: "Optimizing the computer control of breakpoint chlorination" <br> * Page 9, colonne de gauche - page 10 * <br> --- | 1 | |
| A | DE-A-2 420 327 (STELZER) <br> * Revendication 3 * <br> --- | 1 | |
| A,P | FR-A-2 629 073 (C.G.E.) <br> ----- | | |

|  |
|---|
| **DOMAINES TECHNIQUES RECHERCHES (Int. Cl.5)** |
| C 02 F |

**Le présent rapport a été établi pour toutes les revendications**

| Lieu de la recherche | Date d'achèvement de la recherche | Examinateur |
|---|---|---|
| LA HAYE | 25-04-1990 | KASPERS H.M.C. |

EPO FORM 1503 03.82 (P0402)